# FASCICULE DE BREVET EUROPEEN

(11) **EP 4 023 370 B1**
(45) Date de publication et mention de la délivrance du brevet: **18.10.2023**
(21) Numéro de dépôt: 21217371.0
(22) Date de dépôt: 23.12.2021
(51) Int. Cl.: B22F 10/25, B22F 12/44, B22F 12/53, B33Y 30/00, B23K 26/14, B23K 26/342

(54) **TETE D'IMPRESSION 3D A LASER**
3D-LASERDRUCKKOPF
LASER 3D PRINTING HEAD

(30) Priorité: 04.01.2021 FR 2100024
(43) Date de publication de la demande: 06.07.2022
(73) Titulaire: Sotimeco, 87280 Limoges (FR)
(72) Inventeur: GUILLAUD, Nicolas, 87100 Limoges (FR); COUSIN, Thierry, 87100 Limoges (FR)
(74) Mandataire: Debay, Damien

(56) Documents cités:
- EP-B1- 1 179 382
- EP-B1- 3 159 094
- WO-A1-2019/151913
- FR-A1- 3 068 901
- FR-A1- 3 095 774
- US-A1- 2019 314 932

## Description

### DOMAINE TECHNIQUE DE L'INVENTION

**La** présente invention concerne de manière générale le domaine des imprimantes 3d, en particulier des têtes d'impression 3D.

**Par** impression 3D, on entend une impression tridimensionnelle utilisant un procédé de fabrication additive, afin de réaliser un objet ou une structure à partir d'une superposition de plusieurs couches de matière. On parle aussi de procédés de fabrication de pièces en volume par ajout ou agglomération de matière.

Elle concerne particulièrement les imprimantes à impression 3D utilisant la projection d'un flux d'une matière (poudre, fil ou liquide) sur un substrat avec un flux d'énergie laser, par exemple par la technologie CLAD (Construction Laser Additive Directe) ou par le procédé DED (Direct Energy Déposition, dépôt sous énergie concentrée). L'énergie laser va chauffer le substrat de façon à créer une zone chaude appelée bain de fusion. La matière à imprimer, par exemple une poudre, va fusionner de manière partielle ou totale, selon la technologie, et former une première couche, puis le processus est répété afin de créer une structure 3D à partir de la formation de plusieurs couches successives de matière, chaque couche fusionnant avec la couche sur laquelle elle est déposée lors du chauffage de cette dernière (qui forme le substrat pour la couche suivante) par l'énergie laser.

### ETAT DE LA TECHNIQUE ANTERIEURE

Il existe aujourd'hui de nombreuses technologies permettant de réaliser une impression 3D de façon plus ou moins précise et sûre, avec des combinaisons très différentes d'imprimantes 3D et de matières/matériaux associés.

**En** effet, le matériau utilisé pour l'impression 3D d'une structure, varie en fonction des contraintes de l'imprimante et de l'objet à réaliser. A cela s'ajoutent des contraintes de stabilité et d'interaction du matériau avec son environnement.

Ainsi, la demande FR1904734 (non publié à cette date) décrit une imprimante 3D présentant une buse comprenant un laser déporté permettant d'éloigner le bain de fusion de la tête d'impression. Cela permet de simplifier la chauffe du substrat (7) à l'endroit précis où la matière, par exemple la poudre, doit être déposé, et la chauffe de la matière elle-même le cas échéant.

La demande CN104611696 présente une tête d'impression de configuration complexe comprenant un faisceau laser divisé en deux faisceaux laser redirigé vers le substrat par des miroirs pour le chauffer afin de former un bain de fusion. La poudre est introduite à partir de multiples directions et propulsée à l'aide d'un ventilateur, et un gaz de protection annulaire à la périphérie de l'extrémité avant de la buse permet sa protection contre les interactions de l'environnement. Les publications FR3095774A1, US2019314932A1, EP3159094B1, FR3068901 A1, EP1179382B1, WO2019151913A1 divulguent des autres têtes d'impression.

Ces solutions présentent l'inconvénient de ne pas chauffer de manière uniforme le substrat et/ou la matière à déposer lorsque la forme du produit à imprimer est complexe. Il en résulte des défauts potentiels dans le produit fini pour certaines formes.

Certains professionnels du secteur ont tenté de proposer des imprimantes capables d'imprimer de façon fiable n'importe quelle forme même complexe. Cependant ces imprimantes sont souvent de structure complexe, consomment beaucoup d'énergie et présente une vitesse d'impression relativement lente.

Dans ce contexte, il serait donc intéressant de proposer une imprimante 3D qui permettent une impression améliorée au niveau de sa fiabilité et de sa réalisation, et ce pour toutes les formes de produit à imprimer, tout en proposant une buse fiable et simple de conception.

### EXPOSE DE L'INVENTION

La présente invention a donc pour objet de proposer une tête d'impression 3D à laser, permettant de palier au moins une partie des inconvénients de l'art antérieur.

L'invention a ainsi pour but d'améliorer notamment l'impression dans sa précision, sa fiabilité, et/ou sa réalisation.

**Ce** but est atteint par une tête d'impression pour une imprimante 3D, pour une impression tri-dimensionnelle sur un substrat comprenant au moins :
- un conduit d'acheminement de matière, dans lequel passe un flux de matière à déposer sur le substrat,
- un conduit de source d'énergie dans lequel est susceptible de passer au moins un faisceau d'une source d'énergie, par exemple un laser, les conduits d'acheminements de matière et de source d'énergie présentant chacun leur extrémité de sortie vers le substrat dans une buse,

l'extrémité de sortie dudit conduit d'acheminement de matière s'étendant au moins dans la buse selon un axe de sortie X de ladite matière à déposer du conduit d'acheminement de matière vers le substrat,
l'extrémité de sortie dudit conduit de source d'énergie s'étendant au moins dans la buse selon un axe de sortie Y dudit faisceau vers le substrat et/ou la matière à déposer,
l'axe de sortie Y du conduit de source d'énergie présentant un axe différent de l'axe de sortie X de la matière à déposer,
la tête d'impression comprenant en outre un système de mise en rotation d'au moins le conduit de source d'énergie, le conduit de source d'énergie étant rendu mobile en rotation autour dudit axe de sortie X.

Selon une particularité, le conduit de source d'énergie présente au moins un coude, au moins une première partie du conduit en amont du coude s'étendant selon l'axe X de sortie du conduit d'acheminement, le conduit de source d'énergie comprenant en outre au moins deux miroirs destinés à modifier la trajectoire du laser dans le conduit, dans lequel le premier miroir avec lequel entre en contact le faisceau de la source d'énergie, présente un angle entre 30 et 60°, préférentiellement 40° et 50°, encore préférentiellement 45°.

Selon une autre particularité, au moins un des, de préférence les, angles des deux miroirs sont modifiables.

**Selon** une autre particularité, au moins un, de préférence chacun des miroirs du conduit de source d'énergie comprend en outre un ensemble de bagues de réglage des angles des miroirs.

Selon une autre particularité, le système de mise en rotation comprend une couronne d'entraînement destinée à entrainer en rotation au moins le conduit de source d'énergie, ladite couronne d'entraînement étant couplé au moins au conduit de source d'énergie et à une courroie et de préférence en outre à au moins un ensemble de pignon et galet tendeur.

Selon une autre particularité, le conduit d'acheminement de matière est mobile en rotation autour de l'axe de sortie X.

Selon une autre particularité, le conduit d'acheminement de matière comprend deux cylindres séparés par un espace dans lequel est acheminé ladite matière, lesdits deux cylindres sont solidaires et fixe par rapport au conduit de source d'énergie.

Selon une autre particularité, les deux cylindres comprennent un orifice ouvert de façon à laisser passer le coude du conduit.

Selon une autre particularité, l'espace entre les cylindres présente des rampes afin de former un ou plusieurs entonnoirs, ou sous-conduits, configurés pour concentrer la matière à acheminer.

Selon une autre particularité, le conduit d'acheminement de matière comprend un guide libre en rotation autour de l'axe central de sortie de matière.

Selon une particularité, le conduit d'acheminement de matière comprend un tube flexible en amont du guide libre en rotation et couplé à celui-ci.

Selon une particularité, la matière à acheminer est un fil.

Selon une particularité, la tête d'impression comprend en outre un barillet comprenant des orifices comprenant chacun un canal, chacun desdits canaux étant reliés en amont à un réservoir de matière ou à une source d'énergie lumineuse, et reliés en aval au barillet, ledit barillet étant configuré pour pouvoir effectuer un mouvement de rotation, les canaux étant disposés radialement autour de l'axe de rotation du barillet de sorte que ladite rotation dudit barillet permet l'alignement d'un canal parmi les canaux avec le conduit d'acheminement de matière afin de les mettre en correspondance l'un avec l'autre.

Selon une particularité, la tête d'impression comprend un conduit de fluide protecteur (4) dans lequel passe un flux protecteur (41) de fluide protecteur, la paroi externe du conduit d'acheminement de matière (3) est mitoyenne à la paroi interne du conduit de flux protecteur (4), les conduits étant configurés pour que le flux protecteur (41) crée un environnement inerte à la sortie de la buse (2) et dans un espace de travail autour du dépôt (20) de la matière à déposer sur le substrat (7).

Certains modes de réalisation de la présente invention concernent aussi une imprimante 3D munie d'un bras robotisé, avec ou sans armoire robot comprenant une tête d'impression, et une source d'énergie formant un faisceau, par exemple un laser, destiné à passer par le conduit de source d'énergie pour chauffer ladite matière à déposer et/ou le substrat.

La présente invention concerne aussi un procédé d'impression 3D à l'aide d'une tête d'impression tel que décrite précédemment dans lequel sont réalisés les étapes suivantes :
- Déplacement du laser en rotation autour de l'axe X de sortie du conduit d'acheminement de matière par rapport à la trajectoire de la tête d'impression,
- Chauffage du substrat par un laser pour créer un bain de fusion (9),
- Propulsion d'un flux protecteur de fluide protecteur, de préférence un gaz inerte, par le conduit de fluide protecteur afin de créer un espace de travail inerte autour du bain de fusion et de la tête de la buse,
- Dépôt de matière sur le substrat par le flux de transport du conduit d'acheminement de matière de la tête d'impression.

### BREVE DESCRIPTION DES FIGURES

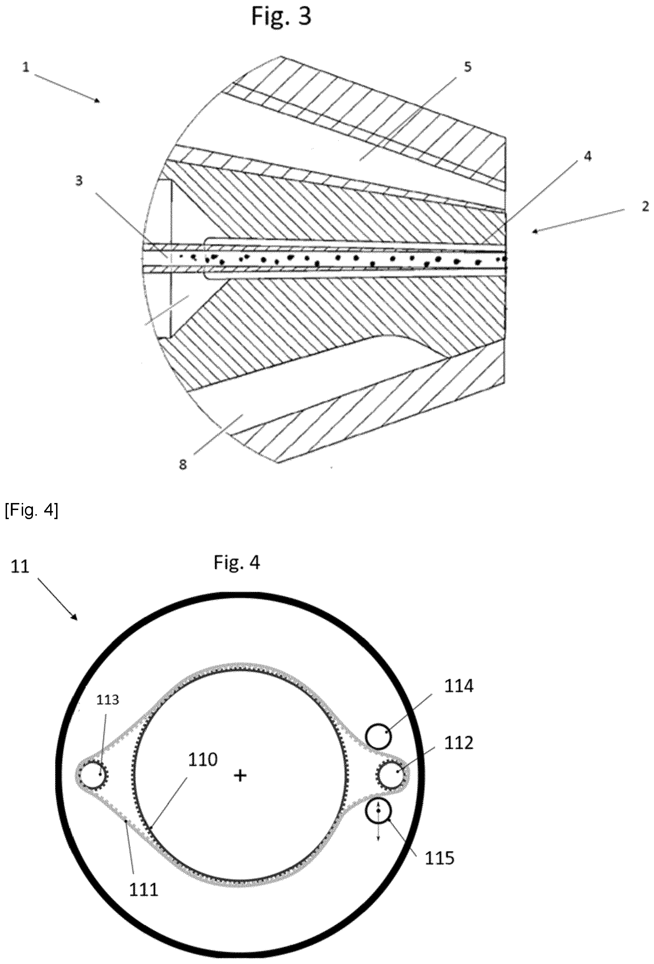

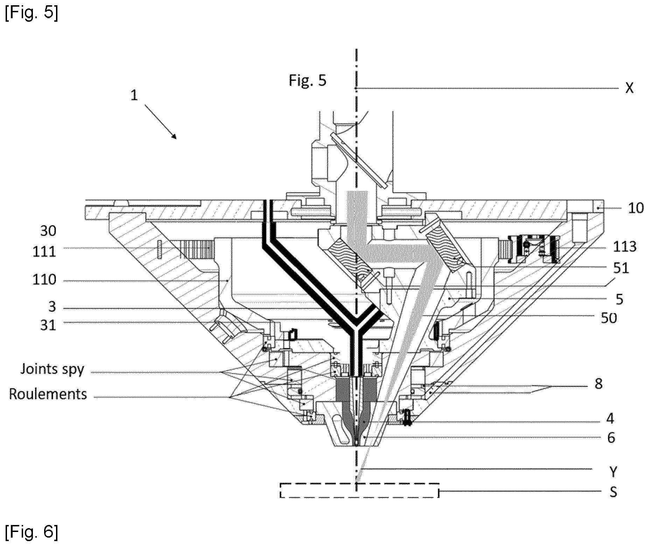

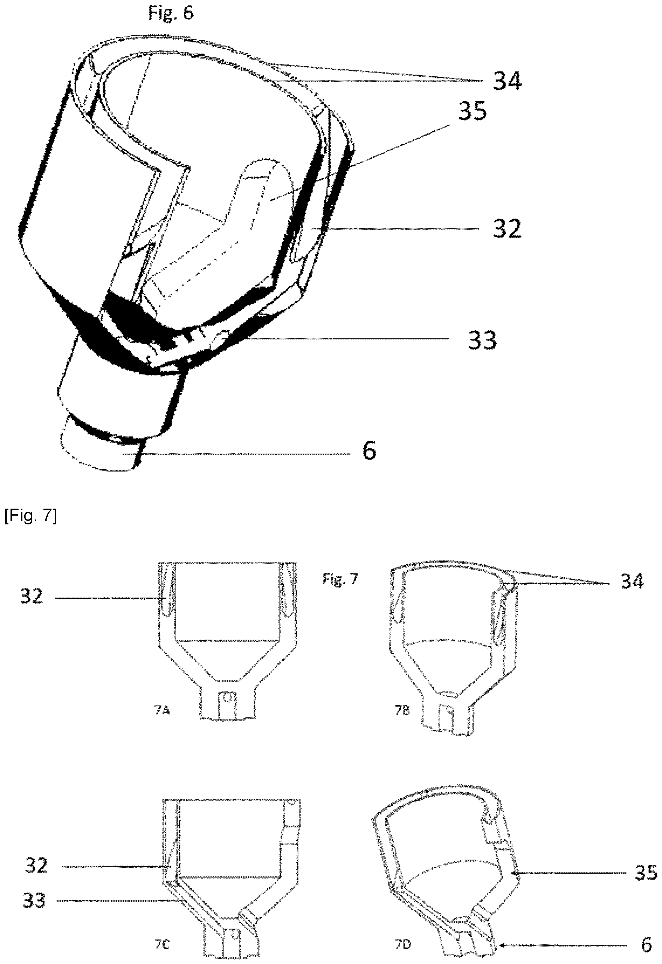

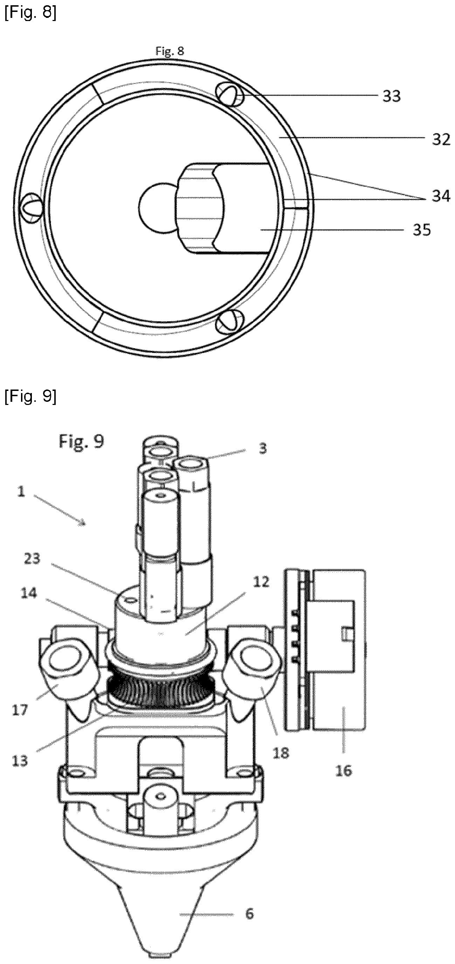

D'autres caractéristiques, détails et avantages de l'invention ressortiront à la lecture de la description qui suit en référence aux figures annexées, qui illustre :

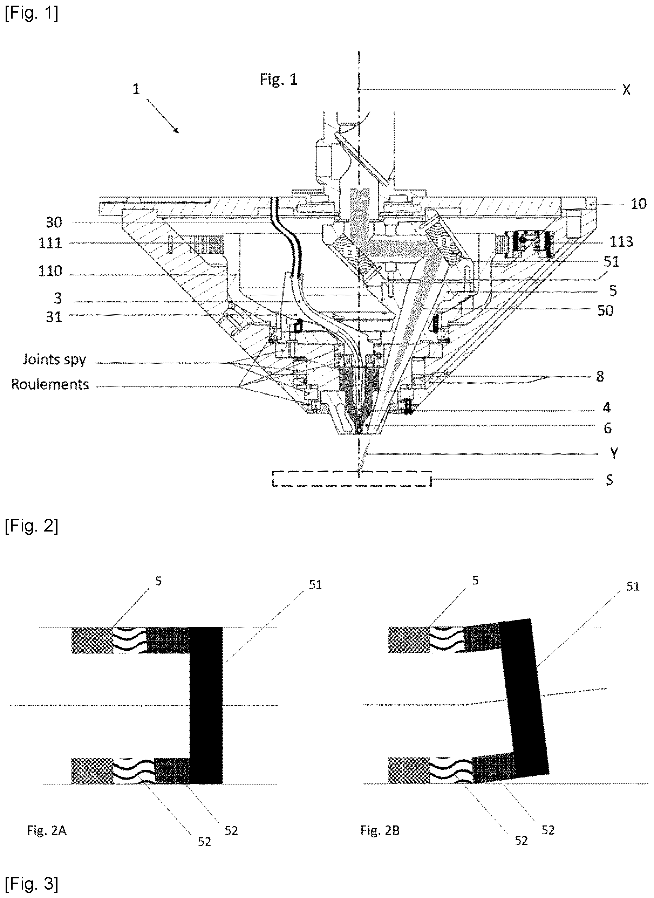

- [Fig. 1] représente un schéma de coupe d'une tête d'impression selon un premier mode de réalisation.
- |Fig. 2] représente le fonctionnement du réglage de l'orientation des miroirs du conduit laser, lorsque le miroir est droit, selon le 1^{er} mode de réalisation (Fig. 2A) et lorsque le miroir est orienté, selon le 1^{er} mode de réalisation (Fig. 2B).
- |Fig. 3] représente une extrémité de la buse de la tête d'impression.
- |Fig. 4] représente le fonctionnement du système de rotation selon un premier mode de réalisation.
- |Fig. 5] représente un schéma de coupe d'une tête d'impression selon un second mode de réalisation.
- |Fig. 6] représente un schéma de coupe du conduit d'acheminement de matière selon le second mode de réalisation.
- |Fig. 7] représente différentes vues schématiques de côté du conduit d'acheminement de matière selon le second mode de réalisation.
- |Fig. 8] représente une vue de haut d'un schéma du conduit d'acheminement de matière selon le second mode de réalisation.
- [Fig. 9] représente une vue schématique de la tête d'impression selon un troisième mode de réalisation comprenant un barillet.

### DESCRIPTION DETAILLEE DE L'INVENTION

De manière générale, la présente invention comporte une tête d'impression pour une imprimante 3D, pour une impression tri-dimensionnelle sur un substrat (7) comprenant au moins :
- un conduit d'acheminement de matière, dans lequel passe un flux de matière à déposer sur le substrat (7),
- un conduit de source d'énergie dans lequel est susceptible de passer au moins un faisceau d'une source d'énergie, par exemple un laser, les conduits d'acheminements de matière et de source d'énergie présentant chacun leur extrémité de sortie vers le substrat (7) dans une buse (2),

l'extrémité de sortie dudit conduit d'acheminement de matière s'étendant au moins dans la buse selon un axe de sortie X de ladite matière à déposer du conduit d'acheminement de matière vers le substrat (7),
l'extrémité de sortie dudit conduit de source d'énergie (5) s'étendant au moins dans la buse selon un axe de sortie Y dudit faisceau vers le substrat (7) et/ou la matière à déposer,
l'axe de sortie Y du conduit de source d'énergie présentant un axe différent de l'axe de sortie X de la matière à déposer,
la tête d'impression (1) comprenant en outre un système de mise en rotation d'au moins le conduit de source d'énergie, le conduit de source d'énergie étant rendu mobile en rotation autour dudit axe de sortie X.

Avantageusement, la structure de la tête d'impression (1) selon l'invention avec un laser déporté permet d'avoir une élévation de la température et un bain de fusion situés en dehors de la bus, de préférence sur le substrat, et améliore aussi sa compacité et diminue son poids, et donc son inertie ce qui permet d'augmenter la vitesse d'impression en baissant simultanément à la fois la consommation d'énergie et les erreurs d'alignement lors des mouvements répétés de la tête d'impression (1) pendant l'impression. En effet, plutôt que de faire tourner la tête d'impression complète, on fait tourner le conduit de source d'énergie. Cela permet ainsi de réduire l'énergie nécessaire à la rotation, réduire l'usure des pièces qui subissent moins de contraintes, l'ensemble à tourner étant moins lourd que dans les dispositifs classiques de l'art antérieur. La réduction du nombre de pièces qui tournent améliore aussi la précision de l'impression et l'accélération desdites pièces tournantes.

Dans certains modes de réalisation, le conduit de source d'énergie présente au moins un coude, au moins une première partie du conduit en amont du coude s'étendant selon l'axe X de sortie du conduit d'acheminement, le conduit de source d'énergie comprenant en outre au moins deux miroirs destinés à modifier la trajectoire du laser dans le conduit, dans lequel le premier miroir avec lequel entre en contact le faisceau de la source d'énergie, présente un angle entre 30 et 60°, préférentiellement 40° et 50°, encore préférentiellement 45°.

**La** présence d'un coude et d'une première partie du conduit en amont du coude s'étendant selon l'axe X permet avantageusement de simplifier le montage de la tête en permettant d'obtenir une entrée de conduit de source d'énergie dont l'axe ne bouge pas malgré la rotation dudit conduit, ce qui permet avantageusement d'avoir une source d'énergie fixe par rapport à la tête. De préférence, le trajet du faisceau d'énergie suit l'axe X entre la source d'énergie et ledit coude. Un miroir ou réflecteur présent au niveau de ce coude permet de réfléchir le faisceau d'énergie selon un angle défini.

L'angle des miroirs dépend des contraintes d'encombrement de la buse. En effet, un conduit laser dont le coude produit un trajet horizontal permet de gagner en encombrement vertical, tandis qu'un trajet de conduit plus vertical permet de gagner en encombrement horizontal.

Dans certains modes de réalisation, le premier miroir du conduit est fixe et le second miroir présente un angle variable.

Dans certains modes de réalisation alternatifs, l'angle du second miroir est fixe pour une configuration de tête et définit la position du point de rencontre de la matière ajoutée et du laser. L'angle peut par exemple se situer autour de 30° plus ou moins 10°.

Dans certains modes de réalisation alternatifs, les angles des deux miroirs sont modifiables, par exemple avant une impression.

La source d'énergie, tel qu'un laser, peut ainsi facilement être déplacée, modifiée et/ou réglée, y compris pendant le fonctionnement de la buse entière, de la source d'énergie et/ou pendant l'acheminement de matière.

Il suffit de faire tourner le conduit de source d'énergie (5) en fonction du déplacement de ladite tête d'impression (1) pour modifier l'orientation de la zone chauffée par ledit laser (5). Avantageusement, cette variation peut être réalisée avant ou pendant l'impression 3D.

Il est en effet possible de modifier l'angle d'un miroir du conduit de source d'énergie. La taille de l'espace de travail est ainsi facilement modifiable sans la changer la buse (2) ou la tête d'impression (1), à l'inverse de l'art antérieur. Cela permet aussi de faire varier la taille de l'espace de travail, c'est-à-dire la longueur de l'espace entre la sortie de la buse (2) et le substrat (7) où la matière est déposée.

**En** outre, en amont de la présente buse exposée, Il est aussi possible de modifier la position d'une lentille par lequel passe la source d'énergie afin de modifier la distance focale. Ainsi, la taille de la zone de fusion (ou bain de fusion) est facilement modifiable sans la changer la buse (2). Cela permet aussi de faire varier la taille du dépôt de matière.

Dans certains modes de réalisation, au moins un, de préférence chacun des miroirs du conduit de source d'énergie comprend en outre un ensemble de bagues de réglage des angles des miroirs.

Le réglage de chacun des miroirs est ainsi réalisé par deux cylindres en rotation dont les faces sont décalées d'un angle alpha, plus cet angle est petit, plus la précision de réglage sera grande et moins la variation angulaire du miroir sera importante. Le mouvement de la première bague (52) par rapport à l'autre bague (52) modifie l'angle de de correction (Fig. 2a et 2B, valeur max de 2 alpha). Le mouvement de l'ensemble des deux bagues (52) par rapport au bâti (10), modifie l'azimut du réglage. Cela permet d'orienter les miroirs dans n'importe quelle direction (azimut).

Dans certains modes de réalisation, le système de mise en rotation comprend une couronne d'entraînement destinée à entrainer en rotation au moins le conduit de source d'énergie, ladite couronne d'entraînement étant couplé au moins au conduit de source d'énergie et à une courroie et de préférence en outre à au moins un ensemble de pignon et galet tendeur.

Avantageusement, et tel qu'illustré à titre d'exemple à la figure 4, la rotation du conduit de la source d'énergie (5) est assurée par une courroie (111) crantée qui épouse une couronne (110) crantée en aluminium et un ou plusieurs pignons (112, 113). Cela diminue fortement le bruit car plus de contact métal/métal, moins d'usure et allègement de la structure globale. A l'inverse, d'autres moyens de mise en rotation du conduit de laser tels qu'un engrenage et un pignon présentent plusieurs inconvénients, à savoir un bruit accru, un accroissement des efforts, ce qui impose une couronne en acier trempé et alourdit la tête, une usure augmentée qui malgré la dureté des pièces serait plus précoce que le présent système avec courroie.

Dans certains modes de réalisation, des galets tendeurs (114, 115) peuvent être ajoutés dont au moins l'un est mobile (115), préférentiellement deux, ce qui permet avantageusement à la fois de tendre la courroie (111) mais surtout d'avoir une zone de contact plus grande avec au moins un pignon, dit entraineur (112).

Le conduit de la source d'énergie (5) partage son axe de rotation avec l'axe de sortie de matière afin que le faisceau d'énergie (50), par exemple un laser, chauffe toujours à la même distance la matière à chauffer et/ou le substrat. Ainsi le bain de fusion reste uniforme, et seule l'orientation du faisceau d'énergie est modifiée, afin de chauffer tout le temps de la même manière. La matière doit quant à elle arriver par l'axe central de rotation, entre autres pour pouvoir fournir un jet de poudre non divergent. Le flux de matière peut en outre être protégé par un flux protecteur l'entourant lors de sa sortie de la buse, grâce à un conduit de flux protecteur entourant le conduit de flux de matière.

Dans certains modes de réalisation, le conduit de flux de matière comprend au moins une portion depuis l'extrémité de sortie dudit flux qui partage l'axe de sortie de matière central sur au moins 15mm, préférentiellement au moins 20mm.

Dans certains modes de réalisation, le conduit d'acheminement de matière (3) est mobile en rotation autour de l'axe de sortie X.

Dans certains modes de réalisation, le conduit d'acheminement de matière (3) comprend deux cylindres (34) séparés par un espace dans lequel est acheminé ladite matière, lesdits deux cylindres sont solidaires et fixe par rapport au conduit de source d'énergie (5).

Dans certains modes de réalisation, les deux cylindres (52) comprennent un orifice (35) ouvert de façon à laisser passer le coude du conduit.

Dans certains modes de réalisation, l'espace entre les cylindres présente des rampes (32) afin de former un ou plusieurs entonnoirs, ou sous-conduits (33), configurés pour concentrer la matière à acheminer.

Ainsi les figures 5, 6 et 7 et 8 montrent l'agencement de ces deux cylindres formant le conduit d'acheminement de matière (3). Plus précisément, comme visible à titre d'exemple à la figure 6, le centre des deux cylindres est évidé et un orifice (35) est formé traversant les deux cylindres (34) afin de pouvoir faire passer le conduit d'énergie (5). La matière à acheminer passe ainsi entre les deux cylindres (32), ceux-ci étant fixes par rapport au conduit d'énergie (5) mais en rotation par rapport au bâti (10) et à la partie du conduit d'acheminement de matière fixe par rapport au bâti situé en amont des deux cylindres (34). Cela permet ainsi d'avoir une pièce simple en rotation à l'intérieur d'un bâti fixe (10). Les figures 7A, 7B, 7C et 7D présentent différentes vues en coupe du conduit d'acheminement de matière (3), et l'espace entre les deux cylindres (34) comprend des rampes (32) qui se rejoignent afin de former un entonnoir menant à un sous-conduit (33) pour concentrer la matière en un même point en aval des cylindres, avant la sortie de celle-ci hors de la buse. Il est à noter que ce mode de réalisation ne fonctionne que pour des matières à l'état de poudre ou de fluide (liquide, voire gazeux) mais pas à l'état de fil.

Dans certains modes de réalisation, le conduit d'acheminement de matière comprend un guide libre en rotation autour de l'axe central de sortie de matière.

Dans certains modes de réalisation, le conduit d'acheminement de matière comprend un tube flexible en amont du guide libre en rotation et couplé à celui-ci.

Ainsi, pour effectuer le croisement entre le conduit de matière et de le conduit d'énergie, au moins une portion du conduit de flux de matière est formée par un tuyau souple. Le tuyau souple avec son guide permet d'accéder aux positions de - 180° à +180° et au-delà, ce qui permet de couvrir toutes les positions. Ainsi, le guide matière est susceptible d'être déplacé en rotation avec le conduit d'énergie lorsque ledit conduit d'énergie entre en contact avec celui-ci lors de sa rotation.

Lors de la rotation de la tête, pendant presque toute la rotation, on peut supposer que le guide matière reste en position fixe (par exemple induite par le tuyau flexible). Lorsque l'on arrive à la fin de la rotation (dans les 2 sens), cette pièce entre en contact avec le support de miroir et comme la ration le permet (ainsi que le tuyau flexible), l'acheminement de la matière continue de se faire. La rotation libre associé au tuyau flexible nous permet de réaliser 360° de rotation (-180° à +180°, par exemple).

Dans certains modes de réalisation, le guide matière présente une capacité de rotation faible par rapport à l'axe central, par exemple 30°. Dans certains modes de réalisation alternatifs, le guide matière présente une capacité de rotation totale par rapport à l'axe central, soit environ -180° à +180°. Avantageusement, cette capacité de rotation est fonction du tube flexible relié audit guide matière, et l'Homme du métier choisira la longueur et la flexibilité du tube flexible en fonction de la rotation que doit pouvoir faire le guide matière, en fonction d'où ledit guide est placé par rapport au conduit de source d'énergie au repos. Par exemple, dans le cas où le guide de matière est placé au repos en regard du conduit de source d'énergie par rapport à leur axe de rotation, une capacité de rotation de 30 voire 20 degrés suffit amplement, car la rotation du conduit d'énergie est généralement comprise entre -180° et +180°. On comprend que dans la pratique, il est préférable de permettre au conduit et au guide de tourner légèrement au-delà de ces valeurs afin d'avoir une marge pour la production de la buse.

Dans certains modes de réalisation, le guide de matière est couplé avec un tuyau souple qui forme une portion du conduit de flux de matière en amont dudit guide. Lors de la rotation du conduit de source d'énergie, la partie du tuyau souple est configurée pour passer au-dessus du conduit de source d'énergie lorsque celui-ci entre en contact et pousse le guide matière. Cela peut représenter par un exemple un angle de 10° à chaque extrémité du mouvement de rotation du conduit de source d'énergie. Cela permet avantageusement de permettre une rotation libre de la part du guide matière, tout en rappelant celui-ci en position de repos grâce à l'action élastique du tube flexible, une fois que le conduit de source d'énergie n'est plus en contact avec ledit guide.

Dans certains modes de réalisation, l'angle de rotation du conduit de source d'énergie, qui définit donc la position du faisceau d'énergie tel qu'un laser par rapport au conduit d'acheminement de matière est calculé pour être constant par rapport à la trajectoire de fabrication. Ce calcul est implémenté dans un logiciel qui permet de générer les déplacements de la tête d'impression.

Avantageusement, la rotation telle que proposé dans l'exposé de la demande permet ainsi de déposer de la matière dans toutes les directions et d'avoir une chauffe de matière homogène aboutissant à une forme de cordon déposé homogène. Dans le cas d'un déplacement purement en translation entre la pièce et la tête, les cordons de matière ne peuvent être générés que dans une direction, puisqu'à tout changement de direction, l'arrivée du laser ne se fera plus au même endroit ce qui modifie la morphologie du cordon déposé.

Cette rotation du conduit de source d'énergie permet d'avoir toujours la même position du laser par rapport à la normale à la trajectoire de la tête, par exemple derrière ou devant. Cela permet de faire tourner moins de pièces, une meilleure accélération et moins d'inertie donc plus de précision, une simplification du moyen de rotation, une consommation et une usure réduite. Il est ainsi plus simple de ne faire tourner que le guide matière plutôt que l'ensemble de la tête d'impression.

La présente invention permet ainsi de travailler sur des pièces complexes qu'il n'est pas facile de faire tourner pour avoir toujours la même position du laser, par rapport à la trajectoire.

A l'inverse, la rotation du substrat proposé dans certains dispositifs de l'art antérieur présente des inconvénients pour la réalisation de certaines formes, telle qu'un cylindre, qui nécessite une rotation trop rapide.

Dans certains modes de réalisation comprenant un tube flexible et/ou guide libre en rotation, la matière à acheminer est un fil. En effet, ce mode de réalisation est particulièrement utile lorsqu'un fil de matière est utilisé, car le mode de réalisation comprenant les deux cylindres ne fonctionne pas avec un fil de matière.

Ce premier mode de réalisation est représenté à titre d'exemple à la figure 1. Ainsi, au niveau du bâti (10) de la tête d'impression (1), le conduit d'acheminement de matière (3) est formé par un tube flexible (30) qui peut se déformer lorsqu'il entre en contact avec le conduit d'énergie (5) rotatif. Le conduit d'acheminement de matière (3) étant fixe par rapport au bâti, contrairement au conduit d'énergie (5), mobile en rotation par rapport à l'axe X, cela permet de faire tourner ledit conduit d'énergie (5) sans que celui-ci soit bloqué par un élément complètement fixe comme le conduit d'acheminement de matière (3). En outre, tube flexible (30) est couplé à un guide flexible (31) rigide, apte tourner autour de l'axe X de sortie de la matière lorsqu'il entre en contact avec ledit conduit d'énergie (5). Cela permet d'éviter d'endommager le tube flexible, l'ensemble pouvant en outre être maintenu au repos à une certaine position, par la disposition et l'élasticité du tube flexible (30). Des joints, roulements, couronne (110) et courroie (111) permettent la rotation des pièces mobile par rapport au bâti (10). Ce mode de réalisation permet d'utiliser un fil, un liquide ou une poudre comme matière à déposer sur le substrat (S). Le conduit d'énergie (5) comprenant deux miroirs réflecteurs (51, α, β)

En outre, dans le mode de réalisation présenté à la figure 1, les miroirs comprennent des bagues (52) sur le conduit d'énergie (5) permettant d'orienter chaque miroir (51) dans n'importe quelle direction afin de modifier l'azimut du faisceau d'énergie (50).

Dans certains modes de réalisation, les parties en rotation de la buse comprend des roulements et des joints. Avantageusement, les roulements assurent le centrage de la partie mobile et les joints permettent l'étanchéité des circuits d'eau de refroidissement et d'acheminement du gaz de protection.

En effet, dans certains modes de réalisation, un seul circuit d'eau de refroidissement (8) comprend plusieurs arrivées d'eau réparties entre les différents joints afin de refroidir les différents éléments de la buse, notamment les miroirs du conduit de source d'énergie.

**La** source d'énergie (non représenté) peut être situé dans la tête d'impression (1), ou plus en amont dans l'imprimante, mais est déporté et donc indépendant par rapport au conduit d'acheminement de matière et préférentiellement du conduit de fluide protecteur, ce qui permet de simplifier la chauffe du substrat (7) à l'endroit précis où la matière, par exemple la poudre, doit être déposé, et la chauffe de la matière elle-même le cas échéant, réalisée de préférence une fois que ladite matière est à l'extérieur de la buse. Cela permet d'améliorer la répétabilité de l'impression en chauffant toujours de la même manière (par la même orientation) la matière et le substrat en fonction de la trajectoire de la tête d'impression. Par indépendant, on entend que le faisceau d'énergie ne partage pas le même conduit que le conduit d'acheminement de matière.

**On** comprend par fluide un milieu matériel déformable au moins par chauffage. On regroupe sous cette appellation les liquides, les gaz et les plasmas, en opposition avec un solide.

On comprend par « buse » une sortie d'un tube qui peut comprendre un rétrécissement du diamètre de la section en aval, là où la matière sort, par rapport à une zone du tube en amont, dans le sens d'acheminement des flux vers le substrat (7). Cependant, ce terme n'induit pas forcément ce changement de diamètre de la section. La tête de buse (6) est ainsi l'extrémité de sortie de celle-ci, donc la portion la plus en aval, et la plus rétrécie dans le cas où on a un changement de diamètre.

**On** comprend par « en amont », une zone située à l'opposé de la tête de buse (6) de la tête d'impression (1), correspondant à la sortie du flux de matière et du flux protecteur (41). Par exemple l'axe, préférentiellement longitudinal, (X) passe par une zone proximale de la tête d'impression (1), qui contient les réservoirs de matière et de fluides, et une zone distale, d'où sortent la matière et les fluides. A l'inverse, on comprend par « en aval » la zone située vers la sortie des différents flux, et proche du substrat (7) sur lequel est imprimé la matière.

L'axe de sortie de matière (X) que suit l'extrémité en aval du conduit d'acheminement de matière (3) est un axe par lequel passe le flux de matière à déposer sur le substrat (7). Cet axe traverse la buse (2) jusqu'au substrat (7). Cet axe n'est pas forcément perpendiculaire audit substrat.

La matière à déposer et le fluide de transport sont mélangés ou associés dans une chambre en amont, mais il est possible et intéressant de les associer proche de leur sortie de la buse (2), afin de réduire la longueur des tuyaux utilisés et donc la quantité de matière perdue à chaque changement de matière.

Avantageusement, le fait d'avoir les parois des conduits mitoyennes permet d'utiliser des matériaux différents pour les conduits en fonction des contraintes associées à chaque conduit. Par exemple, on peut envisager un conduit d'acheminement de matière (3) dans un premier matériau très résistant par exemple du carbure de tungstène, et le conduit de flux protecteur dans un second matériau, par exemple du cuivre permettant une meilleure dissipation de la chaleur.

Dans certains modes de réalisation, la paroi externe du conduit d'acheminement de matière (3) correspond à la paroi interne du conduit de flux protecteur. Cela présente l'avantage de simplifier la conception des deux conduits.

Dans certains modes de réalisation, les conduits d'acheminement de matière et de fluide protecteur sont concentriques. Cela présente l'avantage de répartir le fluide protecteur de manière uniforme autour du fluide de transport contenant la matière à déposer. Cela peut aussi permettre une longueur de jet plus importante hors de la buse (2), et éventuellement une protection sur une plus grande longueur hors de la buse (2).

Dans certains modes de réalisations, le diamètre du conduit de fluide protecteur (4) représente environ entre 1.2 et 5 fois le diamètre du conduit d'acheminement de matière (3), de préférence entre 1.3 et 3 fois le diamètre, préférentiellement encore environ 1.5 fois. En effet, le conduit de fluide protecteur (4) ne doit pas être beaucoup plus grand que le conduit d'acheminement de matière (3) qu'il entoure, afin de réduire la quantité de fluide protecteur utilisé, et la pression nécessaire à l'expulsion dudit fluide protecteur.

Dans certains modes de réalisation, le conduit de fluide protecteur (4) s'évase radialement, en aval, afin de former un cône divergent autour du conduit d'acheminement de matière (3). Dans d'autres modes de réalisation, le conduit de fluide protecteur (4) rétrécit radialement, en aval, afin de former un cône convergent autour du conduit d'acheminement de matière (3).

L'homme du métier dispose ainsi d'une diversité de modes de réalisation qui offres divers avantages. Ainsi le choix de la forme du conduit de protection sera adapté aux applications à réaliser, pour obtenir à la sortie de la buse (2) un cône de protection large autour du fluide de transport contenant la matière à déposer, dans le cas d'un conduit évasé formant un cône divergent, ou une augmentation de la vitesse du flux protecteur, dans le cas d'un conduit rétréci radialement, formant un cône convergent.

Dans certains modes de réalisation, le flux protecteur s'étend de façon annulaire et radialement vers l'extérieur, ce qui permet d'assurer un espace de travail large pour protéger efficacement la matière à déposer de son environnement.

Le circuit de refroidissement (8) peut être très proche de la sortie des conduits, donc de la buse (2), mais il peut être plus éloigné. Il est utilisé afin de refroidir la tête d'impression (1) en général, et particulièrement la buse (2) qui est la surface la plus proche du bain de fusion (9), donc de la source de chaleur.

Dans certains modes de réalisation, la matière à déposer est une poudre, un fil ou un liquide. Dans le cas de l'apport de matière par fil, la rotation de la tête permet une meilleure découpe du fil. En effet, cela permet de le faire fondre de manière homogène.

Dans certains modes de réalisation non limitatifs, la matière à déposer est une poudre.

La matière déposée sur le substrat (7) est chauffée au niveau du bain de fusion (9) par la source d'énergie (5), pour fusionner avec les autres particules de poudre déjà présentes sur le substrat (7).

Le flux de matière peut être composé de la matière à déposer seule, ou de celle-ci additionnée d'un fluide, préférentiellement inerte, de transport. Ce fluide peut être un liquide, par exemple de l'eau, ou un gaz, par exemple un gaz inerte tel que l'argon. Grâce à la présence du fluide inerte, pour le transport de la matière à déposer, par exemple de la poudre, l'oxygène présent dans l'air pourra plus difficilement réagir avec la matière, par exemple pour l'oxyder, et le risque que des impuretés, poussières présentes dans l'air se retrouvent dans ce mélange sera réduit.

Dans certains modes de réalisation, la tête d'impression (1) comprend en amont de la buse (2) un réservoir de fluide de transport, le réservoir comprenant un conduit de fluide de transport qui rejoint le conduit d'acheminement de matière (3) en aval du réservoir.

Préférentiellement, les conduits de la tête d'impression présentent entre leurs extrémités une longueur environ inférieure à 50 cm, de préférence environ inférieure à 15 cm, par exemple environ 11 cm. Cela permet avantageusement de réduire la longueur des conduits, et donc les pertes de charges dues aux fluides qui traversent les conduits, et les pertes de matière dues à la matière présente dans les conduits à expulser et à jeter lors de l'arrêt de l'impression. En effet, en cas de changement ou d'arrêt de l'impression, la matière encore dans les conduits peut être contaminée par l'air extérieur et doit donc être éliminée. De la même façon, en cas de changement de matière à imprimer, il peut être nécessaire de retirer la matière précédente encore présente dans les conduits, en particulier si lesdits conduits sont longs et contiennent une quantité de matière résiduelle non négligeable.

Dans certains modes de réalisation, l'imprimante 3D ou la tête d'impression (1) comprend en amont du conduit d'acheminement de matière (3) un réservoir de matière à déposer, le dit réservoir comprenant un conduit de matière à déposer qui rejoint en aval le conduit de fluide de transport.

Dans divers modes de réalisation, l'imprimante 3D ou la tête d'impression (1) comprend en amont du conduit de fluide protecteur (4) un réservoir de fluide protecteur, le dit réservoir étant relié audit conduit de fluide protecteur (4).

Dans certains modes de réalisation, l'imprimante 3D ou la tête d'impression (1) comprend un vibrateur, ou un bol vibrant, au niveau, ou à la place, du réservoir de matière à déposer. Ainsi, lorsque le vibrateur est activé, les vibrations émises font tomber par gravité de la matière, préférentiellement de la poudre, du réservoir dans le conduit de matière. La matière est ensuite aspirée par le flux de fluide de transport lorsqu'elle rejoint celui-ci.

**Dans** certains modes de réalisation, le conduit de fluide de transport (24) présente une section variable le long du conduit, la section variable comprenant une portion de section présentant un rétrécissement de sa section, suivie en aval par une portion présentant un élargissement de sa section pour atteindre la taille de la section du conduit d'acheminement de matière (3), ladite portion ainsi élargie étant connectée audit conduit d'acheminement (3), et, le conduit de matière rejoignant le conduit de fluide de transport avant ladite connexion audit conduit d'acheminement (3), de préférence au niveau de la portion présentant un élargissement de sa section. En d'autres termes, le conduit de fluide de transport (24) comprend une portion de section variable configurée pour former un effet Venturi, c'est-à-dire présenter un profil provoquant une augmentation puis une diminution de la pression et de la vitesse du fluide, ladite portion reliant le conduit de fluide de transport, ne contenant que le fluide de transport qui n'est pas encore chargé de la matière à déposer, au conduit d'acheminement de matière (3). Ladite portion ainsi élargie peut présenter une section plus large, égale ou inférieure à la section du conduit de fluide de transport avant rétrécissement. De préférence, le conduit de matière rejoint le conduit de fluide de transport au niveau de la portion de section élargie avant la connexion avec le conduit d'acheminement de matière (3). Cela présente l'avantage de permettre un mélange optimal de la matière dans le fluide de transport. En effet, par l'effet Venturi, le fluide de transport, comprimé et convergent par le rétrécissement de la section du conduit, est alors chargé en matière à déposer au moment où il se dilate et diverge avec ladite matière lors de l'élargissement de la section, permettant une répartition optimale de la matière à déposer dans le flux de transport. Dans certains modes de réalisation, le conduit de fluide de transport comprend une portion de section constante après la portion rétrécie et avant l'élargissement de la portion. Dans certains modes de réalisation, le conduit de matière rejoint le conduit de fluide de transport au niveau de la portion de section constante.

Le flux protecteur permet un effet de guidage de la poudre, renforcé par l'effet venturi. Cela augmente la distance possible de travail, c'est-à-dire la distance entre l'extrémité de la buse (2) et le point d'intersection du laser (5) avec le faisceau de poudre et/ou le substrat (7). Ainsi, lors de l'utilisation de matériaux à haut point de fusion, par exemple les aciers réfractaires, en aéronautique, la buse (2) est moins exposée à la chaleur et permet des hautes températures sans détruire l'extrémité de la buse (2) et sans que la poudre commence à passer en phase ductile à l'intérieur de la buse (2) à cause d'une trop grande chaleur, ce qui améliore la régularité du débit de sortie de la matière à imprimer. De plus, cette distance de travail plus importante améliore l'accessibilité de la buse (2) pour les pièces à imprimer de formes complexe à accessibilité réduite.

Grâce à l'effet Venturi, la vitesse et la pression des particules de poudre peuvent être beaucoup plus faible sans altérer la précision du dépôt, ce qui a pour avantage d'éviter une déformation du bain de fusion (9) qui est à l'état liquide. Cela permet ainsi l'obtention d'une qualité métallurgique moins sensible à la complexité des formes à obtenir.

Cette protection améliorée par le rétrécissement de la section dudit conduit, a pour avantage d'augmenter la longueur des jets de fluides hors de la buse (2), sans augmenter la pression en amont.

Il est aussi possible de modifier la distance entre la sortie, en aval, du conduit d'acheminement de matière (3) et la sortie encore plus en aval, du conduit de fluide protecteur (4), la modification étant modulée en fonction des besoins des différentes applications. En d'autres termes, la distance de réglage de la longueur des fins de conduits (3, 4) peut être modifiée en fonction des besoins et des contraintes.

De tels modes présentent des avantages tels qu'éviter de réaliser le mélange très en amont du conduit d'acheminement de matière (3), par exemple éviter de réaliser le mélange avant la tête d'impression (1), qui nécessiterait que la matière soit mélangée préalablement au fluide de transport, et/ou que le réservoir et le vibrateur soient remplis de fluide de transport sous pression. Cela permet aussi de réduire les pertes de charges et les pertes de matières respectivement provoquées par le passage de la matière dans les conduits et par de la matière résiduelle dans les conduits.

Dans certains modes de réalisation, l'imprimante 3D ou la tête d'impression (1) comprend plusieurs réservoirs de matières différentes, chacun comprenant un conduit étant relié en aval au conduit de fluide de transport (24) entre la section rétrécie et la section élargie.

Cela permet avantageusement de mélanger de façon simple et optimale plusieurs matières différentes à déposer.

Dans certains modes de réalisation, le fluide protecteur est un gaz inerte.

Dans certains modes de réalisation, la vitesse du flux de fluide protecteur (41) est identique à celle du flux de matière à déposer. Dans d'autres modes de réalisation, la vitesse du flux de fluide protecteur est différente de celle du flux de la matière à déposer. Cela permet d'adapter les flux en fonction des applications (types de matériaux, type de substrat (7) et formes à imprimer).

Dans certains modes de réalisation, le flux de transport comprend un gaz inerte pour améliorer le transport de la matière,

Dans certains modes de réalisation, le fluide inerte du flux de transport est identique à celui présent dans le flux protecteur, par exemple l'argon.

Dans des modes de réalisation représentant des variantes, tels qu'illustrées par exemple à la figure 9 de manière non limitative, un barillet (12) comprenant des orifices (23) comprenant chacun un canal, chacun desdits canaux pouvant être reliés en amont à un réservoir de matière, par exemple un fil, ou un fluide, ou à une source d'énergie lumineuse, tel qu'un pointeur laser, et reliés en aval au barillet (12), ledit barillet (12) étant configuré pour pouvoir effectuer un mouvement de rotation, les canaux étant disposés radialement autour de l'axe de rotation du barillet (12) de sorte que ladite rotation dudit barillet (12) permet l'alignement d'un canal parmi les canaux avec le conduit d'acheminement de matière (3) afin de les mettre en correspondance l'un avec l'autre. En d'autres termes, les canaux (19) sont reliés à des sources en amont, là où se trouvent en général les réservoirs des différents flux et la source d'énergie, tandis que lesdits canaux (19) peuvent être alignés et reliés en aval au conduit d'acheminement de matière (3) dans la partie distale de la tête d'impression (1), plus proche de la tête de buse (6). Cela permet de pouvoir réaliser un gradient de différentes matières de manière automatique. Cela rend disponible différents types d'utilisation et d'impression avec la même tête d'impression (1).

Les réservoirs de matières auxquels les canaux du barillet (12) sont reliés peuvent comprendre seulement la matière à déposer, un mélange de matière à déposer et de fluide de transport, ou encore comprendre une structure telle que décrite précédemment, avec un réservoir de matière séparé d'un réservoir de fluide protecteur, les deux réservoirs se rejoignant par des conduits situés en amont du canal (19) correspondant, de préférence au niveau d'une section configurée pour créer un effet Venturi afin d'obtenir un flux de transport homogène.

Le barillet (12) peut présenter autant de canaux (19) que nécessaire, dans les limites imposées par l'encombrement. Dans des modes de réalisation, le barillet (12) comprend 6 canaux. Dans d'autres modes de réalisation, le barillet (12) en comprend 4.

Dans des modes de réalisation, le barillet (12) est solidaire d'un moyen de transmission (13) de mouvement, préférentiellement une roue dentée (13), configurée pour être entrainée en rotation par un moyen d'entrainement (14) complémentaire, par exemple une vis sans fin. Avantageusement, cela permet à l'utilisateur de choisir quel canal aligner et donc quel flux doit être utiliser. Cela permet par exemple d'alterner deux matières différentes lors de l'utilisation d'une même buse (2), de manière automatique ou non.

De préférence, le moyen d'entrainement (14), préférentiellement la vis sans fin, est couplé à un moteur (16). Avantageusement, cela permet de rendre le choix de flux et de canaux (19) automatisé et automatique.

Le barillet (12) peut tourner dans les 2 sens, horaire et antihoraire. De préférence, sa rotation est restreinte à un tour complet afin de ne pas emmêler ou trop tirer les canaux (19) qui sont fixés sur ledit barillet (12).

Dans des modes de réalisation, la tête d'impression (1) comprend aussi une bague d'étanchéité, qui entoure au moins la buse (2). L'étanchéité est aussi améliorée par un joint torique d'étanchéité.

Dans des modes de réalisation, la buse (2) est standard et interchangeable et est car fixée mécaniquement. Ainsi, la conception selon l'invention permet aussi de changer de buse (2) sans avoir besoin de changer la tête d'impression (1) entière contrairement aux produits de l'art antérieur dans lesquels les orifices (23) de projection de poudre sont usinés "dans la masse "du corps de buse (2) pour des raisons d'encombrement. La structure permet le changement simple
- d'une buse (2) endommagée ou usée,
- de la forme du jet choisi,
- et de la taille de l'orifice en fonction du besoin de l'application

Dans des modes de réalisation, la buse (2) présente une tête de buse (6) de forme circulaire, ovale, rectangulaire ou carrée.

Les différents éléments de la tête d'impression (1) peuvent être réalisées dans toutes sortes de matériaux tels que le carbure, saphir, céramique, acier inoxydable, produits industriels et standards du commerce, de haute qualité et à faible coût tout en conservant un corps en cuivre permettant un bon refroidissement de l'ensemble, qui est particulièrement utile pour des utilisations à haute température. Ces matériaux permettent en effet de résister à des températures du double de celles du cuivre.

La buse (2) et/ou la tête de buse (6) est de préférence réalisée en carbure pour améliorer sa résistance à l'abrasion et sa tenue à la chaleur.

La tête de buse (6) peut aussi présenter un bouclier thermique pour la protéger afin de résister à la température due à l'impression sans altérer l'accessibilité de l'ensemble.

### LISTE DES SIGNES DE REFERENCE

1. Tête d'impression
2. Buse
3. Conduit d'acheminement de matière
30. Tube flexible du conduit de matière
31. Guide flexible
32. Rampes du conduit d'acheminement de matière
33. Sous-conduits du conduit d'acheminement
34. Cylindres du conduit d'acheminent de matière
35. Orifice
4. Conduit de fluide protecteur
5. Conduit d'énergie
50. Faisceau d'énergie (Laser)
51. Réflecteurs, Miroirs
52. Bagues
6. Tête de buse
7. Substrat
8. Circuit de refroidissement
9. Bain de fusion
10. Bâti
11. Système de mise en rotation
110. Couronne
111. Courroie
112. Pignon entraineur
113. Pignon libre
114. Galet tendeur fixe
115. Galet tendeur mobile
12. Barillet
13. Moyen de transmission du barillet
14. Moyen d'entrainement
16. Moteur
17. Entrée fluide de refroidissement
18. Sortie fluide de refroidissement
23. Orifices du barillet
41.Flux protecteur
X. Axe de sortie du conduit d'acheminement
Y. Axe de sortie du conduit de source d'énergie

## Revendications

1. Tête d'impression pour une imprimante 3D, pour une impression tri-dimensionnelle sur un substrat (7) comprenant au moins :
- un conduit d'acheminement de matière, dans lequel passe un flux de matière à déposer sur le substrat (7),
- un conduit de source d'énergie dans lequel est susceptible de passer au moins un faisceau d'une source d'énergie, par exemple un laser, les conduits d'acheminements de matière et de source d'énergie présentant chacun leur extrémité de sortie vers le substrat (7) dans une buse (2), l'extrémité de sortie dudit conduit d'acheminement de matière s'étendant au moins dans la buse selon un axe de sortie X de ladite matière à déposer du conduit d'acheminement de matière vers le substrat (7),
l'extrémité de sortie dudit conduit de source d'énergie (5) s'étendant au moins dans la buse selon un axe de sortie Y dudit faisceau vers le substrat (7) et/ou la matière à déposer,
l'axe de sortie Y du conduit de source d'énergie présentant un axe différent de l'axe de sortie X de la matière à déposer,
la tête d'impression (1) comprenant en outre un système de mise en rotation d'au moins le conduit de source d'énergie, ladite tête d'impression étant **caractérisée en ce que** le conduit de source d'énergie est rendu mobile en rotation autour dudit axe de sortie X.

2. Tête d'impression (1) selon la revendication précédente, dans laquelle le conduit de source d'énergie présente au moins un coude, au moins une première partie du conduit en amont du coude s'étendant selon l'axe X de sortie du conduit d'acheminement, le conduit de source d'énergie comprenant en outre au moins deux miroirs aptes à modifier la trajectoire du laser dans le conduit, dans lequel le premier miroir avec lequel entre en contact le faisceau de la source d'énergie, présente un angle entre 30 et 60°, préférentiellement 40° et 50°, encore préférentiellement 45°.

3. Tête d'impression (1) selon la revendication précédente dans laquelle au moins un des, de préférence les, angles des deux miroirs sont modifiables.

4. Tête d'impression (1) selon la revendication précédente, dans laquelle au moins un, de préférence chacun des miroirs du conduit de source d'énergie comprend en outre un ensemble de bagues de réglage des angles des miroirs.

5. Tête d'impression (1) selon l'une des revendications précédentes, dans lequel le système de mise en rotation comprend une couronne d'entraînement destinée à entrainer en rotation au moins le conduit de source d'énergie, ladite couronne d'entraînement étant couplé au moins au conduit de source d'énergie et à une courroie et de préférence en outre à au moins un ensemble de pignon et galet tendeur.

6. Tête d'impression (1) selon l'une des revendications précédentes, dans lequel le conduit d'acheminement de matière est mobile en rotation autour de l'axe de sortie X.

7. Tête d'impression (1) selon la revendication précédente, dans lequel le conduit d'acheminement de matière comprend deux cylindres séparés par un espace dans lequel est acheminé ladite matière, lesdits deux cylindres sont solidaires et fixe par rapport au conduit de source d'énergie.

8. Tête d'impression (1) selon la revendication précédente, dans laquelle les deux cylindres comprennent un orifice ouvert de façon à laisser passer le coude du conduit.

9. Tête d'impression (1) selon la revendication précédente, dans lequel l'espace entre les cylindres présente des rampes afin de former un ou plusieurs entonnoirs, ou sous-conduits (33), configurés pour concentrer la matière à acheminer.

10. Tête d'impression (1) selon l'une des revendications quelconques 1 à 5, dans laquelle le conduit d'acheminement de matière comprend un guide libre en rotation autour de l'axe central de sortie de matière.

11. Tête d'impression (1) selon la revendication précédente, dans laquelle le conduit d'acheminement de matière comprend un tube flexible en amont du guide libre en rotation et couplé à celui-ci.

12. Tête d'impression (1) selon l'une des revendications 1 à 5, 10 ou 11 dans laquelle la matière à acheminer est un fil.

13. Tête d'impression (1) selon l'une des revendications précédentes, qui comprend en outre un barillet (12) comprenant des orifices (23) comprenant chacun un canal (19), chacun desdits canaux (19) étant reliés en amont à un réservoir de matière ou à une source d'énergie lumineuse, et reliés en aval au barillet (12), ledit barillet étant configuré pour pouvoir effectuer un mouvement de rotation, les canaux (19) étant disposés radialement autour de l'axe de rotation du barillet (12) de sorte que ladite rotation dudit barillet (12) permet l'alignement d'un canal (19) parmi les canaux (19) avec le conduit d'acheminement de matière (3) afin de les mettre en correspondance l'un avec l'autre.

14. Tête d'impression (1) selon l'une des revendications précédentes, qui comprend en outre un conduit de fluide protecteur (4) dans lequel passe un flux protecteur (41) de fluide protecteur, la paroi externe du conduit d'acheminement de matière (3) est mitoyenne à la paroi interne du conduit de fluide protecteur (4), les conduits étant configurés pour que le flux protecteur (41) crée un environnement inerte à la sortie de la buse (2) et dans un espace de travail autour du dépôt (20) de la matière à déposer sur le substrat (7).

15. Imprimante 3D munie d'un bras robotisé, avec une armoire robot comprenant une tête d'impression (1) selon l'une des revendications précédentes, et une source d'énergie (5), formant un faisceau (50), par exemple un laser, destiné à passer par le conduit de source d'énergie pour chauffer ladite matière à déposer et/ou le substrat (7).

16. Procédé d'impression 3D à l'aide d'une tête d'impression (1) selon l'une des revendications 1 à 14 dans lequel sont réalisés les étapes suivantes :
- Déplacement du laser en rotation autour de l'axe X de sortie du conduit d'acheminement de matière par rapport à la trajectoire de la tête d'impression,
- Chauffage du substrat (7) par un laser (5) pour créer un bain de fusion (9),
- Propulsion d'un flux protecteur de fluide protecteur, de préférence un gaz inerte, par le conduit de fluide protecteur afin de créer un espace de travail inerte autour du bain de fusion (9) et de la tête de la buse,
- Dépôt de matière sur le substrat (7) par le flux de transport du conduit d'acheminement de matière de la tête d'impression (1).

## Patentansprüche

1. Druckkopf für einen 3D-Drucker für ein dreidimensionales Drucken auf einem Substrat (7), umfassend mindestens:
- eine Materialtransportleitung, in der ein auf dem Substrat abzulagernder Materialstrom (7) durchläuft,
- eine Energiequellenleitung, in der mindestens ein Strahl einer Energiequelle, beispielsweise ein Laser, durchlaufen kann, wobei die Materialtransport- und Energiequellenleitungen jeweils ihr Austrittsende zum Substrat (7) hin in einer Düse (2) aufweisen,
wobei sich das Austrittsende der Materialtransportleitung mindestens in der Düse entlang einer Austrittsachse X des abzulagernden Materials der Materialtransportleitung zum Substrat (7) hin erstreckt,
wobei sich das Austrittsende der Energiequellenleitung(5) mindestens in der Düse entlang einer Austrittsachse Y des Strahls zum Substrat (7) und/oder abzulagernden Material hin erstreckt,
wobei die Austrittsachse Y der Energiequellenleitung eine Achse aufweist, die von der Austrittsachse X des abzulagernden Materials verschieden ist,
wobei der Druckkopf (1) ferner ein System zum Indrehungversetzen mindestens der Energiequellenleitung umfasst, wobei der Druckkopf **dadurch gekennzeichnet ist, dass** die Energiequellenleitung um die Austrittsachse X herum drehbeweglich gemacht wird.

2. Druckkopf (1) nach einem der vorhergehenden Ansprüche, bei dem die Energiequellenleitung mindestens einen Bogen aufweist, wobei sich mindestens ein erster Teil der Leitung stromauf des Bogens entlang der Austrittsachse X der Transportleitung erstreckt, wobei die Energiequellenleitung ferner mindestens zwei Spiegel umfasst, die geeignet sind, die Bahn des Lasers in der Leitung zu ändern, wobei der erste Spiegel, mit dem der Strahl der Energiequelle in Kontakt gelangt, einen Winkel zwischen 30 und 60°, bevorzugt 40° und 50°, noch bevorzugter 45°, aufweist.

3. Druckkopf (1) nach dem vorhergehenden Anspruch, bei dem mindestens einer der, bevorzugt die, Winkel der beiden Spiegel änderbar sind.

4. Druckkopf (1) nach dem vorhergehenden Anspruch, bei dem mindestens einer, bevorzugt jeder, der Spiegel der Energiequellenleitung ferner eine Anordnung aus Einstellringen für die Winkel der Spiegel umfasst.

5. Druckkopf (1) nach einem der vorhergehenden Ansprüche, bei dem das System zum Indrehungversetzen einen Antriebskranz umfasst, der dazu bestimmt ist, mindestens die Energiequellenleitung drehanzutreiben, wobei der Antriebskranz mindestens an die Energiequellenleitung und an einen Riemen und bevorzugt ferner an mindestens eine Anordnung aus Zahnrad und Spannrolle gekoppelt ist.

6. Druckkopf (1) nach einem der vorhergehenden Ansprüche, bei dem die Materialtransportleitung um die Austrittsachse X herum drehbeweglich ist.

7. Druckkopf (1) nach dem vorhergehenden Anspruch, bei dem die Materialtransportleitung zwei Zylinder umfasst, die durch einen Raum getrennt sind, in dem das Material transportiert wird, wobei die beiden Zylinder fest verbunden und in Bezug auf die Energiequellenleitung feststehend sind.

8. Druckkopf (1) nach dem vorhergehenden Anspruch, bei dem die beiden Zylinder eine offene Bohrung umfassen, so dass der Bogen der Leitung durchgelassen wird.

9. Druckkopf (1) nach dem vorhergehenden Anspruch, bei dem der Raum zwischen den Zylindern Rampen aufweist, um einen oder mehrere Trichter zu bilden, oder Teilkanäle (33), die dazu ausgestaltet sind, das zu transportierende Material zu konzentrieren.

10. Druckkopf (1) nach einem der Ansprüche 1 bis 5, bei dem die Materialtransportleitung eine um die zentrale Materialaustrittsachse herum drehbewegliche Führung umfasst.

11. Druckkopf (1) nach dem vorhergehenden Anspruch, bei dem die Materialtransportleitung einen Schlauch stromauf der drehbeweglichen Führung umfasst, der an diese gekoppelt ist.

12. Druckkopf (1) nach einem der Ansprüche 1 bis 5, 10 oder 11, bei dem das zu transportierende Material ein Faden ist.

13. Druckkopf (1) nach einem der vorhergehenden Ansprüche, der ferner eine Trommel (12) umfasst, die Bohrungen (23) umfasst, die jeweils einen Kanal (19) umfassen, wobei jeder der Kanäle (19) stromauf mit einem Materialbehälter oder mit einer Lichtenergiequelle verbunden ist und stromab mit der Trommel (12) verbunden ist, wobei die Trommel dazu ausgestaltet ist, eine Drehbewegung vollführen zu können, wobei die Kanäle (19) radial um die Drehachse der Trommel (12) herum angeordnet sind, so dass die Drehung der Trommel (12) das Fluchten eines Kanals (19) unter den Kanälen (19) mit der Materialtransportleitung (3) ermöglicht, um sie miteinander in Übereinstimmung zu bringen.

14. Druckkopf (1) nach einem der vorhergehenden Ansprüche, der ferner eine Schutzfluidleitung (4) umfasst, in der ein Schutzstrom (41) aus Schutzfluid durchläuft, wobei die Außenwand der Materialtransportleitung (3) an die Innenwand der Schutzstromleitung (4) angrenzt, wobei die Leitungen dazu ausgestaltet sind, dass der Schutzstrom (41) eine inerte Umgebung am Austritt der Düse (2) und in einem Arbeitsraum um die Ablagerung (20) des auf dem Substrat (7) abzulagernden Materials herum erzeugt.

15. 3D-Drucker, der mit einem Roboterarm ausgestattet ist, mit einem Roboterschrank, der einen Druckkopf (1) nach einem der vorhergehenden Ansprüche umfasst, und einer Energiequelle (5), die einen Strahl (50) bildet, beispielsweise einem Laser, der dazu bestimmt ist, durch die Energiequellenleitung durchzulaufen, um das abzulagernde Material und/oder das Substrat (7) zu erhitzen.

16. Verfahren zum 3D-Drucken mithilfe eines Druckkopfes (1) nach einem der Ansprüche 1 bis 14, bei dem die folgenden Schritte ausgeführt werden:
- Drehbewegen des Lasers um die Austrittsachse X der Materialtransportleitung herum in Bezug auf die Bahn des Druckkopfes,
- Erhitzen des Substrats (7) durch einen Laser (5), um ein Schmelzbad (9) zu erzeugen,
- Ausstoßen eines Schutzstroms aus Schutzfluid, bevorzugt eines inerten Gases, durch die Schutzfluidleitung, um einen inerten Arbeitsraum um das Schmelzbad (9) und den Kopf der Düse herum zu erzeugen,
- Ablagern von Material auf dem Substrat (7) durch den Förderstrom der Materialtransportleitung des Druckkopfes (1).

## Claims

1. Print head for a 3D printer, for three-dimensional printing on a substrate (7), comprising at least:
- a material delivery conduit through which a material flow passes to be deposited on the substrate (7),
- an energy source conduit through which at least one beam of an energy source, such as a laser, can pass, wherein the material and energy source conduits each have their output end towards the substrate (7) within a nozzle (2), the output end of the material delivery conduit extends at least within the nozzle along an X-axis of material output from the material delivery conduit towards the substrate (7), the output end of the energy source conduit (5) extends at least within the nozzle along a Y-axis of said beam towards the substrate (7) and/or the material to be deposited, the Y-axis of the energy source conduit having a different axis from the X-axis of the material to be deposited, the print head (1) further comprising a rotation system for at least the energy source conduit, wherein the energy source conduit is made rotatable around said X-axis of output.

2. Print head (1) according to the preceding claim, wherein the energy source conduit has at least one bend, with at least a first portion of the conduit upstream of the bend extending along the X-axis of the delivery conduit output, and the energy source conduit further comprises at least two mirrors capable of modifying the trajectory of the laser within the conduit, wherein the first mirror, which the energy source beam contacts, has an angle between 30 and 60 degrees, preferably 40 to 50 degrees, and more preferably 45 degrees.

3. Print head (1) according to the preceding claim, wherein at least one, preferably both, of the angles of the two mirrors are adjustable.

4. Print head (1) according to the preceding claim, wherein at least one, preferably each, of the mirrors in the energy source conduit further comprises a set of rings for adjusting the angles of the mirrors.

5. Print head (1) according to any of the preceding claims, wherein the rotation system comprises a drive ring designed to rotate at least the energy source conduit, said drive ring being coupled to at least the energy source conduit and a belt, and preferably further coupled to at least one set of gears and a tensioning pulley.

6. Print head (1) according to any of the preceding claims, wherein the material delivery conduit is rotatable around the output X-axis.

7. Print head (1) according to the preceding claim, wherein the material delivery conduit comprises two cylinders separated by a gap through which said material is transported, and said two cylinders are integral and fixed relative to the energy source conduit.

8. Print head (1) according to the preceding claim, wherein the two cylinders have an open orifice to allow the bend of the conduit to pass through.

9. Print head (1) according to the preceding claim, wherein the space between the cylinders has ramps to form one or multiple funnels or sub-conduits (33) configured to concentrate the material to be delivered.

10. Print head (1) according to any of claims 1 to 5, wherein the material delivery conduit comprises a freely rotating guide around the central axis of material output.

11. Print head (1) according to the preceding claim, wherein the material delivery conduit comprises a flexible tube upstream of the freely rotating guide and coupled to it.

12. Print head (1) according to any of claims 1 to 5, 10, or 11, wherein the material to be delivered is a filament.

13. Print head (1) according to any of the preceding claims, further comprising a barrel (12) with orifices (23), each of which includes a channel (19), each of these channels (19) being connected upstream to a material reservoir or a light energy source and connected downstream to the barrel (12), said barrel being configured to perform a rotational movement, and the channels (19) being arranged radially around the rotation axis of the barrel (12) such that the rotation of the barrel (12) allows aligning of one channel (19) among the channels (19) with the material delivery conduit (3) to match them with each other.

14. Print head (1) according to any of the preceding claims, further comprising a protective fluid conduit (4) through which a protective fluid flow (41) passes, the outer wall of the material delivery conduit (3) being adjacent to the inner wall of the protective fluid conduit (4), the conduits being configured so that the protective flow (41) creates an inert environment at the nozzle (2) output and in a working space around the deposition (20) of the material to be deposited on the substrate (7).

15. 3D printer equipped with a robotic arm, having a robot enclosure comprising a print head (1) according to any of the preceding claims, and an energy source (5) forming a beam (50), such as a laser, intended to pass through the energy source conduit to heat the material to be deposited and/or the substrate (7).

16. Process for 3D printing using a print head (1) according to any of claims 1 to 14, comprising the following steps:
- Rotating movement of the laser around the X-axis of the material delivery conduit relative to the trajectory of the print head,
- Heating the substrate (7) using a laser (5) to create a melt pool (9),
- Propelling a protective fluid flow, preferably an inert gas, through the protective fluid conduit to create an inert working space around the melt pool (9) and the nozzle head,
- Depositing material onto the substrate (7) using the material transport flow from the print head's material delivery conduit (1).
